(19) **Europäisches Patentamt / European Patent Office / Office européen des brevets**

(11) **EP 2 794 343 B1**

(12) **FASCICULE DE BREVET EUROPEEN**

(45) Date de publication et mention de la délivrance du brevet:
**01.05.2019 Bulletin 2019/18**

(21) Numéro de dépôt: **12816703.8**

(22) Date de dépôt: **10.12.2012**

(51) Int Cl.:
**B60L 11/18** *(2006.01)*

(86) Numéro de dépôt international:
**PCT/FR2012/052863**

(87) Numéro de publication internationale:
**WO 2013/093287 (27.06.2013 Gazette 2013/26)**

(54) **PROCEDE D'ECHANGE D'ENERGIE ELECTRIQUE ENTRE UN RESEAU ELECTRIQUE VEHICULANT UNE GRANDEUR ELECTRIQUE CONTINUE OU ALTERNATIVE ET UNE UNITE DE STOCKAGE D'ENERGIE ELECTRIQUE POUR VEHICULE HYBRIDE OU ELECTRIQUE**

VERFAHREN ZUM AUSTAUSCH ELEKTRISCHER ENERGIE ZWISCHEN EINEM ELEKTRISCHEN NETZ ZUR FÖRDERUNG EINER ELEKTRISCHEN GLEICHSTROM- ODER WECHSELSTROMGRÖSSE UND STROMENERGIESPEICHEREINHEIT FÜR HYBRID- ODER ELEKTROFAHRZEUG

METHOD OF EXCHANGING ELECTRICAL ENERGY BETWEEN AN ELECTRICAL NETWORK CONVEYING A DC OR AC ELECTRICAL QUANTITY AND AN ELECTRICAL ENERGY STORAGE UNIT FOR HYBRID OR ELECTRIC VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2011 FR 1162140**

(43) Date de publication de la demande:
**29.10.2014 Bulletin 2014/44**

(60) Demande divisionnaire:
**18187194.8 / 3 412 500**

(73) Titulaire: **Valeo Systèmes de Contrôle Moteur 95800 Cergy (FR)**

(72) Inventeurs:
• **DE SOUSA, Luis**
  **F-95670 Eragny Sur Oise (FR)**
• **BOUCHEZ, Boris**
  **F-95800 Cergy (FR)**
• **DA COSTA, José-Louis**
  **F-95130 Franconville (FR)**

(74) Mandataire: **Argyma**
  **36, rue d'Alsace Lorraine**
  **31000 Toulouse (FR)**

(56) Documents cités:
DE-A1-102010 054 464     FR-A1- 2 938 711
FR-A1- 2 946 473          US-A1- 2010 072 946
US-A1- 2010 237 694       US-A1- 2011 176 343

## Description

La présente invention concerne l'échange d'énergie électrique entre un réseau électrique et une unité de stockage d'énergie électrique pour véhicule hybride ou électrique, l'invention concernant notamment la charge de l'unité de stockage d'énergie électrique par le réseau. L'unité de stockage d'énergie électrique est par exemple formée par une ou plusieurs batteries ou encore une ou plusieurs supercapacités, cette unité de stockage d'énergie servant à alimenter le moteur électrique du véhicule.

Le réseau électrique peut être un réseau électrique industriel géré par un opérateur et déployé sur une commune, une région, un Etat ou plusieurs Etats, ou un réseau local et/ou indépendant, notamment privé.

Les véhicules électriques existant possèdent un chargeur intégré permettant la charge de l'unité de stockage d'énergie par un réseau électrique. Les réseaux électriques disponibles sont très différents, pouvant être monophasés, polyphasés (par exemple triphasés), ou continus. Au sein des réseaux monophasés par exemple, des différences de tension existent entre le réseau monophasé aux USA et au Canada qui délivre une tension de 110V ou 220V, le réseau monophasé au Japon qui délivre une tension de 100V et le réseau monophasé en Europe qui délivre une tension de 240V.

Lorsque l'on souhaite effectuer une charge rapide de l'unité de stockage d'énergie, un réseau continu délivre par conducteur un courant bien plus élevé, notamment entre deux et cinq fois plus élevé, que le courant que délivre par conducteur un réseau triphasé.

En raison de toutes ces différences, la possibilité de charger l'unité de stockage d'énergie du véhicule à partir de n'importe quel réseau est difficilement réalisable et nécessite d'embarquer dans le véhicule plusieurs structures dédiées à chaque type de réseau, par exemple un connecteur dédié à chaque type de réseau électrique et/ou des moyens de commutation interposés entre le connecteur et l'unité de stockage d'énergie électrique dédiés à chaque type de réseau.

La charge de l'unité de stockage d'énergie électrique à partir de tout réseau est ainsi coûteuse, complexe et susceptible de générer un encombrement dans le véhicule.

Il existe un besoin pour permettre un échange d'énergie électrique entre une unité de stockage d'énergie électrique d'un véhicule électrique ou hybride et un réseau électrique de façon simple, peu coûteuse et sans générer d'encombrement. Le document US 20110176343 montre un procédé selon le préambule de la revendication 1 et un système selon le préambule de la revendication 13.

La demande concerne un procédé selon la revendication 1 et un système selon la revendication 13.

L'invention a pour but de répondre à tout ou partie de ce besoin et elle y parvient, selon l'un de ses aspects, à l'aide d'un procédé d'échange d'énergie électrique entre, un réseau électrique véhiculant l'une quelconque d'une grandeur électrique d'alimentation continue et d'une grandeur électrique d'alimentation alternative, et une unité de stockage d'énergie électrique pour véhicule hybride ou électrique, l'unité de stockage faisant partie d'un circuit électrique comprenant en outre :

- un système de commutation comprenant une pluralité de cellules de commutation commandables,
- une pluralité d'inductances, et
- un connecteur permettant de brancher le circuit électrique à un connecteur, notamment de type complémentaire, dudit réseau électrique,

le procédé comportant les étapes selon lesquelles :

- on branche le connecteur du circuit électrique au connecteur, notamment de type complémentaire, dudit réseau électrique, et
- on commande les cellules de commutation en fonction de ce que la grandeur électrique d'alimentation véhiculée par le réseau électrique est continue ou alternative, pour permettre l'échange d'énergie électrique entre le réseau électrique et l'unité de stockage d'énergie électrique.

Plus précisément, cet aspect de l'invention peut concerner un procédé de charge, par un réseau électrique délivrant l'une quelconque d'une grandeur électrique d'alimentation continue et d'une grandeur électrique d'alimentation alternative, d'une unité de stockage d'énergie électrique pour véhicule hybride ou électrique, l'unité de stockage faisant partie d'un circuit électrique comprenant en outre :

- un système de commutation comprenant une pluralité de cellules de commutation commandables,
- une pluralité d'inductances, et
- un connecteur permettant de brancher le circuit électrique à un connecteur, notamment de type complémentaire, dudit réseau électrique,

le procédé comportant les étapes selon lesquelles :

- on branche le connecteur du circuit électrique au connecteur, notamment de type complémentaire, dudit réseau électrique, et
- on commande les cellules de commutation en fonction de ce que la grandeur électrique d'alimentation délivrée par le réseau électrique est continue ou alternative, pour permettre la charge de l'unité de stockage d'énergie à partir du réseau électrique.

Selon le procédé ci-dessus, le connecteur peut être branché de façon interchangeable à un réseau électrique véhiculant, notamment délivrant, aussi bien une grandeur électrique d'alimentation continue qu'une grandeur électrique d'alimentation alternative et la commande des cellules de commutation est adaptée à cette grandeur électrique. Il en résulte un circuit électrique universel pouvant être branché à tout réseau pour échanger de l'énergie électrique avec celui-ci, notamment pour charger l'unité de stockage d'énergie électrique.

Le circuit électrique peut être embarqué sur le véhicule.

La grandeur électrique d'alimentation véhiculée, notamment délivrée, par le réseau peut être une tension ou un courant.

Le procédé peut comporter l'étape selon laquelle on détermine si la grandeur électrique véhiculée, notamment délivrée, par le réseau est continue ou alternative. Cette étape peut aussi permettre de déterminer si cette grandeur est une tension ou un courant. Lorsqu'il est déterminé que la grandeur est alternative, il peut en outre être déterminé à cette étape si le réseau est monophasé ou polyphasé.

L'étape de détermination peut être mise en oeuvre manuellement, par exemple via une interface utilisateur du véhicule permettant à son utilisateur d'indiquer la nature de la grandeur électrique véhiculée, notamment délivrée, par le réseau.

En variante, cette étape de détermination peut être automatisée, une communication du réseau électrique vers le véhicule indiquant par exemple au circuit électrique si ladite grandeur électrique est continue ou alternative et, le cas échéant s'il s'agit d'un courant, d'une tension, s'il s'agit d'une tension monophasée ou triphasée. Dans un autre exemple d'automatisation, le circuit électrique comprend un système de mesure de ladite grandeur électrique, de sorte que cette étape de détermination est effectuée par le circuit électrique.

Chaque cellule de commutation peut être formée par un montage antiparallèle d'un interrupteur commandable et d'une diode. La diode peut ou non être intrinsèque à l'interrupteur commandable. L'interrupteur commandable est notamment un transistor, par exemple un transistor à effet de champ ou un transistor bipolaire ou un transistor de type IGBT. Une telle cellule de commutation est réversible, permettant le passage du courant à travers celle-ci de façon bidirectionnelle. Chaque cellule de commutation peut être formée par un interrupteur à trois segments bidirectionnel en courant.

Le système de commutation peut comprendre une pluralité de bras, notamment six bras, chaque bras ayant au moins deux cellules de commutation commandables.

Chaque inductance peut être interposée entre deux bras du système de commutation. Chaque inductance peut correspondre à une phase électrique du stator du moteur électrique du véhicule.

Le connecteur du circuit peut comprendre une pluralité de contacts principaux ayant chacun une extrémité libre destinée à être branchée à un contact du connecteur, notamment de type complémentaire, du réseau électrique et une autre extrémité reliée à un point intermédiaire d'une des inductances. Par « point intermédiaire d'une inductance », on désigne un point disposé entre les deux extrémités de l'inductance, par exemple un point milieu. Les avantages associés à l'injection de courant depuis le réseau électrique en un point intermédiaire, notamment milieu, de chaque inductance, sont notamment exposés dans la demande WO 2010/057893 au nom de la Déposante. Une telle injection permet notamment de limiter, voire de supprimer, les mouvements du rotor du moteur dont les inductances du stator sont alimentées électriquement lors de la charge de l'unité de stockage d'énergie.

Au sens de la présente demande, « relié » signifie aussi bien « relié directement », c'est-à-dire sans élément intermédiaire que « relié indirectement », c'est-à-dire via un élément intermédiaire.

Le connecteur peut comporter :

- au moins trois contacts principaux, et
- un contact additionnel ayant une extrémité libre destinée à être branchée à la terre du connecteur, notamment de type complémentaire, du réseau électrique et une autre extrémité destinée à être reliée à la carrosserie du véhicule.

Un tel connecteur peut être branché aussi bien à un réseau véhiculant, notamment délivrant, une tension alternative triphasée, à un réseau véhiculant, notamment délivrant, une tension alternative monophasée, à un réseau véhiculant, notamment délivrant, un courant continu et à un réseau véhiculant, notamment délivrant, une tension continue.

Le connecteur du circuit peut ne comprendre que quatre contacts au total pour acheminer le signal électrique du réseau vers l'unité de stockage d'énergie, à savoir trois contacts principaux et un contact additionnel

Dans une variante, le connecteur du circuit peut comprendre quatre contacts principaux, le quatrième contact principal étant dédié au neutre dans le cas d'un signal électrique monophasé délivré par le réseau électrique.

Lorsque le réseau électrique est un réseau véhiculant, notamment délivrant, une tension alternative polyphasée, notamment triphasée, chaque contact principal peut être branché à une phase du réseau électrique et le contact additionnel à la terre du réseau.

Lorsque le réseau électrique est un réseau véhiculant, notamment délivrant, une tension alternative monophasée, un contact principal du connecteur peut être branché à la phase du réseau, un autre contact principal peut être branché au neutre du réseau et le contact additionnel à la terre du réseau.

Qu'il soit branché à un réseau électrique véhiculant, notamment délivrant, une tension monophasée ou polyphasée, notamment triphasée, le système de commutation peut comprendre un convertisseur de tension continue/continue comprenant au moins deux cellules de commutation commandables, ce convertisseur étant survolteur et/ou dévolteur, et les cellules de commutation des bras et/ou les cellules de commutation du convertisseur peuvent être commandées de manière à ce que l'unité de stockage d'énergie reçoive dans le cas d'une charge par le réseau une tension proche de sa tension nominale, notamment comprise entre 200 V et 400 V, à partir de la tension alternative monophasée ou triphasée délivrée par le réseau électrique.

Ce convertisseur peut permettre dans le cas où l'unité de stockage d'énergie électrique transfère de l'énergie au réseau d'adapter à la valeur de la tension du réseau électrique la valeur de tension aux bornes de ladite unité de stockage d'énergie électrique.

Les cellules de commutation peuvent, pour permettre l'échange d'énergie électrique entre l'unité de stockage d'énergie électrique et le réseau lorsque ce dernier présente une tension alternative monophasée ou triphasée, être commandées selon ce qui est décrit dans la publication "A New On Board Fast Battery Charger " International Conference & Exhibition Autmotive Power Electronics April 2011 Proceedings Ref: 2011 -01.

Lorsque le réseau électrique véhicule, notamment délivre, une tension alternative triphasée ou monophasée, le convertisseur de tension continue/continue est par exemple un hacheur série (encore appelé « buck » en anglais).

Lorsque le réseau électrique véhicule, notamment délivre, entre une borne positive et une borne négative, une tension continue ou un courant continu, les branchements du connecteur au réseau peuvent être effectués comme suit:

- deux contacts principaux sont branchés à l'une de la borne positive et de la borne négative du réseau électrique,
- le troisième contact principal est branché à l'autre de la borne positive et de la borne négative du réseau électrique.

Pour obtenir ces branchements, le connecteur, notamment de type complémentaire, du réseau comprend par exemple :

- deux contacts reliés à l'une de la borne positive et de la borne négative du réseau et que l'on branche aux deux contacts principaux du connecteur du circuit, et
- un contact relié à l'autre de la borne positive et de la borne négative du réseau et que l'on branche au troisième contact principal du connecteur du circuit.

Le contact additionnel du connecteur peut être branché à la terre du réseau.

Comme on peut le voir, les contacts principaux peuvent être utilisés pour un branchement à un réseau alternatif triphasé, alternatif monophasé, ou continu.

Dans le cas de la charge de l'unité de stockage d'énergie électrique, lorsque le réseau électrique délivre, entre la borne positive et la borne négative, un courant continu, la commande des cellules de commutation peut être effectuée comme suit :

- les cellules de commutation des bras reliés au(x) contact(s) branché(s) à la borne positive du réseau électrique sont commandées de manière à permettre la circulation de courants du réseau vers l'unité de stockage d'énergie électrique, et
- les cellules de commutation des bras reliés au(x) contact(s) branché(s) à la borne négative du réseau électrique sont commandés de manière à permettre le retour de courants vers le réseau électrique.

Les interrupteurs commandables des cellules de commutation des bras du système de commutation peuvent être maintenus fermés pour permettre l'alimentation électrique de l'unité de stockage d'énergie par le réseau délivrant un courant continu. Dans ce cas, ces interrupteurs jouent le rôle de relais statiques.

Dans un tel cas, le courant continu peut être délivré par le réseau via un poste de charge intégrant une électronique de commande permettant de contrôler le courant chargeant l'unité de stockage d'énergie électrique.

Au sens de la présente demande, « poste de charge » doit être compris de façon large, désignant tout accès au réseau électrique. Il s'agit ainsi aussi bien d'une partie terminale d'un réseau domestique que d'une borne de charge installée dans un lieu publique, à usage gratuit ou payant.

Le système de commutation peut comprendre un bus continu monté en parallèle des bras et un convertisseur de tension continue/continue interposé entre le bus continu et l'unité de stockage d'énergie et comprenant au moins deux cellules de commutation commandables. Le convertisseur a dans cet exemple pour tension d'entrée la tension du bus continu et pour tension de sortie la tension aux bornes de l'unité de stockage d'énergie.

Le bus continu s'étend entre une borne positive et une borne négative et, au sens de la présente demande, la tension du bus continu est la tension entre la borne positive et la borne négative du bus continu.

Lorsque le réseau électrique véhicule, notamment délivre, un courant continu, les cellules de commutation du système de commutation peuvent être commandées de manière à ce que la tension aux bornes du bus continu augmente sans modifier la valeur de la tension aux bornes de l'unité de stockage d'énergie. La tension aux bornes du réseau électrique est alors asservie par le circuit. Le convertisseur se comporte dans ce cas comme un dévolteur. Le convertisseur de tension continue/continue est par exemple un hacheur série.

De cette façon, le courant véhiculé, notamment délivré, par le réseau électrique diminue, la puissance électrique restant constante, ce qui permet de diminuer les pertes dans les cellules de commutation et les inductances du circuit.

En variante, la commande des cellules de commutation du système de commutation peut permettre de diminuer la tension du bus continu sans modifier la valeur de la tension aux bornes de l'unité de stockage d'énergie. Le réseau électrique peut véhiculer, notamment délivrer, entre la borne positive et la borne négative, une tension continue et le système de commutation peut comporter un bus continu monté en parallèle des bras et un convertisseur de tension continue/continue comprenant au moins deux cellules de commutation, le convertisseur étant interposé entre le bus continu et l'unité de stockage d'énergie.

Le convertisseur a dans cet exemple et lorsque l'on souhaite charger l'unité de stockage d'énergie électrique à l'aide du réseau électrique, pour tension d'entrée la tension du bus continu et pour tension de sortie la tension aux bornes de l'unité de stockage d'énergie. Dans ce cas, la commande des cellules de commutation des bras et/ou des cellules de commutation du convertisseur de tension continue/continue peut être effectuée pour adapter la valeur de la tension continue délivrée par le réseau à la valeur de tension nominale aux bornes de l'unité de stockage, cette dernière étant notamment comprise entre 200 V et 400 V.

Le convertisseur de tension continue/continue est avantageusement une alimentation à découpage (buck/boost en anglais) pouvant aussi bien fonctionner en survolteur qu'en dévolteur. De cette façon, une valeur de tension convenable peut être fournie à l'unité de stockage d'énergie, en abaissant ou élevant la tension continue délivrée par le réseau électrique.

Le convertisseur de tension est par exemple un hacheur série dévoltant la tension du bus continu. Un fonctionnement en mode survolteur du système de commutation comprenant un tel hacheur série peut être obtenu à l'aide des cellules de commutation des bras.

Le réseau électrique véhiculant, notamment délivrant, une tension continue peut être un réseau local indépendant, comprenant par exemple une ou plusieurs batteries alimentées par des sources d'énergie telles que des éoliennes, des panneaux solaires, des piles à combustible ou des générateurs d'hydroélectricité.

En variante, le réseau électrique véhiculant, notamment délivrant, une tension continue peut être un réseau industriel, notamment un réseau triphasé, et la tension continue peut être obtenue à l'aide d'un redresseur triphasé.

En variante encore, le réseau électrique peut être un groupe électrogène comprenant une génératrice et un redresseur. La génératrice est par exemple alimentée en énergie fossile comme du gaz, du pétrole ou un biocarburant.

L'invention permet ainsi un échange d'énergie électrique avec un poste de charge véhiculant une tension continue, et notamment une charge par ce poste de charge. De tels postes de charge peuvent être dépourvus d'électronique de contrôle puisque celle du circuit électrique embarqué sur le véhicule est utilisable. Ces postes de charge peuvent ainsi être moins coûteux, ce qui est avantageux pour l'opérateur du réseau électrique.

Au sens de la présente demande, lorsqu'un élément est interposé entre deux autres éléments, cela ne signifie pas nécessairement que ces trois éléments sont disposés les uns à la suite des autres. Des éléments intermédiaires peuvent ou non être disposés entre l'élément en question et les deux autres éléments.

Dans tout ce qui précède, le connecteur du circuit électrique peut en variante n'être adapté qu'à un seul type de connecteur de réseau électrique, par exemple à un connecteur d'un réseau électrique triphasé, et on utilise un adaptateur pour permettre le branchement du connecteur du circuit électrique aux autres types de réseau. Par exemple lorsque le connecteur du circuit électrique n'est adapté qu'à un réseau électrique triphasé, on utilise l'adaptateur pour brancher le connecteur du circuit électrique à un réseau délivrant une tension alternative monophasée, ou à un réseau délivrant un courant continu ou à un réseau délivrant une tension continue. L'adaptateur présente par exemple plusieurs interfaces interchangeables et chaque interface est dédiée à un type de réseau électrique.

L'invention a encore pour objet, selon un autre de ses aspects, un circuit électrique pour l'échange d'énergie électrique entre un réseau électrique et une unité de stockage d'énergie électrique d'un véhicule hybride ou électrique, le circuit comprenant :

- une unité de stockage d'énergie électrique,
- un système de commutation comprenant une pluralité de cellules de commutation commandables et une unité de commande de ces cellules de commutation,
- une pluralité d'inductances, et
- un unique connecteur configuré pour être branché à un réseau électrique véhiculant, notamment délivrant, l'une quelconque d'une grandeur électrique d'alimentation continue et d'une grandeur électrique d'alimentation alternative,

l'unité de commande du système de commutation étant configurée pour commander les cellules de commutation en fonction de ce que la grandeur électrique véhiculée, notamment délivrée, par le réseau électrique est continue ou alternative.

Le circuit peut notamment permettre la charge de l'unité de stockage d'énergie électrique par le réseau électrique.

Le circuit peut être configuré pour être embarqué sur le véhicule, étant par exemple d'un seul tenant. Le circuit selon l'aspect ci-dessus de l'invention constitue une structure universelle permettant l'échange d'énergie électrique entre l'unité de stockage d'énergie électrique et un réseau électrique, notamment la charge de l'unité de stockage d'énergie électrique par un réseau électrique, véhiculant une grandeur électrique continue ou alternative, qui dans ce dernier cas peut être monophasée ou polyphasée, notamment triphasée.

Tout ou partie des caractéristiques mentionnées ci-dessus en rapport avec le procédé de charge s'appliquent seules ou en combinaison au circuit électrique ci-dessus.

En particulier :

- le système de commutation peut comprendre une pluralité de bras, notamment six bras, comprenant chacun au moins deux cellules de commutation commandables, et/ou
- chaque inductance peut être interposée entre deux bras du système de commutation, et/ou
- chaque inductance peut correspondre à une phase électrique du stator du moteur électrique du véhicule, et/ou
- le connecteur peut comprendre une pluralité de contacts principaux ayant chacun une extrémité libre destinée à être branchée à un contact du connecteur, notamment de type complémentaire, du réseau électrique et une autre extrémité reliée à un point intermédiaire, notamment milieu, d'une des inductances,
- le connecteur peut être associé à un adaptateur permettant son branchement à l'un quelconque des types de réseau électrique mentionnés précédemment.

L'unité de stockage d'énergie électrique est par exemple une batterie ou plusieurs batteries montées en série et/ou en parallèle. L'unité de stockage d'énergie électrique a par exemple une tension nominale comprise entre 200 V et 400 V.

L'invention a encore pour objet, selon un autre de ses aspects, un procédé d'échange d'énergie électrique entre un réseau électrique délivrant un courant continu et une unité de stockage d'énergie électrique, l'unité de stockage faisant partie d'un circuit électrique comprenant en outre :

- un connecteur destiné à être branché à un connecteur, notamment de type complémentaire, du réseau électrique,
- un bus continu interposé entre le connecteur et l'unité de stockage d'énergie électrique, et
- un convertisseur de tension continue/continue interposé entre le bus continu et l'unité de stockage d'énergie.

le procédé comportant l'étape selon laquelle on commande le convertisseur de tension continue/continue de manière à augmenter la valeur de la tension du bus continu sans modifier la valeur de la tension aux bornes de l'unité de stockage d'énergie électrique.

En variante, le convertisseur de tension continue/continue peut être commandé de manière à diminuer la valeur de la tension aux bornes du bus continu sans modifier la valeur de la tension aux bornes de l'unité de stockage d'énergie électrique.

Le procédé peut permettre la charge de l'unité de stockage d'énergie électrique par le réseau électrique.

Le procédé peut comporter l'étape préalable selon laquelle on branche le réseau électrique au circuit électrique, une tension de valeur donnée existant aux bornes du réseau électrique, puis l'étape ci-dessus selon laquelle on commande le convertisseur de tension continue/continue de manière à ce que la tension aux bornes du réseau électrique ait une valeur supérieure ou inférieure à ladite valeur donnée, sans modifier la valeur de la tension aux bornes de l'unité de stockage d'énergie électrique.

La puissance électrique délivrée par le réseau électrique étant constante, la modification de la valeur de la tension du bus continu permet de modifier la valeur du courant véhiculé, notamment délivré, par le réseau électrique et circulant en amont du bus continu. En particulier, lorsque l'on augmente la valeur de la tension du bus continu, on diminue la valeur de ce courant, ce qui réduit les pertes liées au courant du circuit électrique.

Lorsque le circuit électrique comporte des inductances et des cellules de commutation, les inductances et les cellules de commutation étant notamment telles que décrites en rapport avec le circuit électrique ci-dessus, les pertes dans ces inductances et ces cellules de commutation peuvent être réduites.

Le connecteur est par exemple branché sur un poste de charge délivrant le courant continu et ce poste de charge présente entre ses bornes une valeur de tension maximale admissible. Le convertisseur de tension continue/continue peut alors être commandé de manière à ce que la tension aux bornes du poste de charge soit proche de la valeur de tension maximale admissible.

Le convertisseur de tension continue/continue est par exemple une alimentation à découpage, par exemple un hacheur série (convertisseur buck en anglais).

Les différents aspects de l'invention mentionnés ci-dessus permettent d'obtenir l'un et/ou l'autre des avantages suivants :

- avoir un circuit embarqué pour échanger de l'énergie électrique entre un réseau électrique et une unité de stockage d'énergie électrique alimentant un moteur électrique de véhicule dont l'interface électrique et logique est universelle (prise, pin de puissance, pin de signal), que le réseau électrique véhicule, notamment délivre, une grandeur électrique d'alimentation alternative ou continue,
- avoir un circuit embarqué pour échanger de l'énergie électrique entre un réseau électrique et une unité de stockage d'énergie électrique alimentant un moteur électrique de véhicule pouvant être branché à des réseaux électriques alternatifs et à des réseaux électriques véhiculant, notamment délivrant, un courant continu,

- avoir un circuit embarqué pour échanger de l'énergie électrique entre un réseau électrique et une unité de stockage d'énergie électrique alimentant un moteur électrique de véhicule pouvant être branché à un réseau électrique véhiculant, notamment délivrant, un courant continu ou une tension continue,
- avoir un circuit embarqué pour échanger de l'énergie électrique entre un réseau électrique et une unité de stockage d'énergie électrique alimentant un moteur électrique de véhicule pouvant être branché à un réseau électrique véhiculant, notamment délivrant, un courant continu tout en diminuant la valeur du courant continu véhiculé, notamment délivré, par le réseau afin de réduire les pertes liées au courant.

L'invention pourra être mieux comprise à la lecture de la description qui va suivre d'exemples non limitatifs de mise en oeuvre de celle-ci et à l'examen du dessin annexé sur lequel :

- la figure 1 représente de façon très schématique un véhicule électrique et un connecteur d'un circuit selon un exemple de mise en oeuvre de l'invention
- la figure 2 représente le véhicule de la figure 1 lorsqu'il est branché à un réseau électrique délivrant une tension triphasée,
- la figure 3 représente le véhicule de la figure 1 lorsqu'il est branché à un réseau électrique délivrant une tension monophasée,
- la figure 4 représente le véhicule de la figure 1 lorsqu'il est branché à un réseau électrique délivrant un courant continu,
- les figures 5 et 6 représentent différentes façons de commander le système de commutation du circuit électrique lorsque le véhicule est branché à un réseau électrique délivrant une tension continue,
- les figures 7 à 9 représentent différents réseaux électriques délivrant une tension continue auxquels le véhicule peut être branché, et
- la figure 10 représente de façon simplifiée l'ensemble formé par le réseau électrique et le circuit électrique du véhicule de la figure 4.

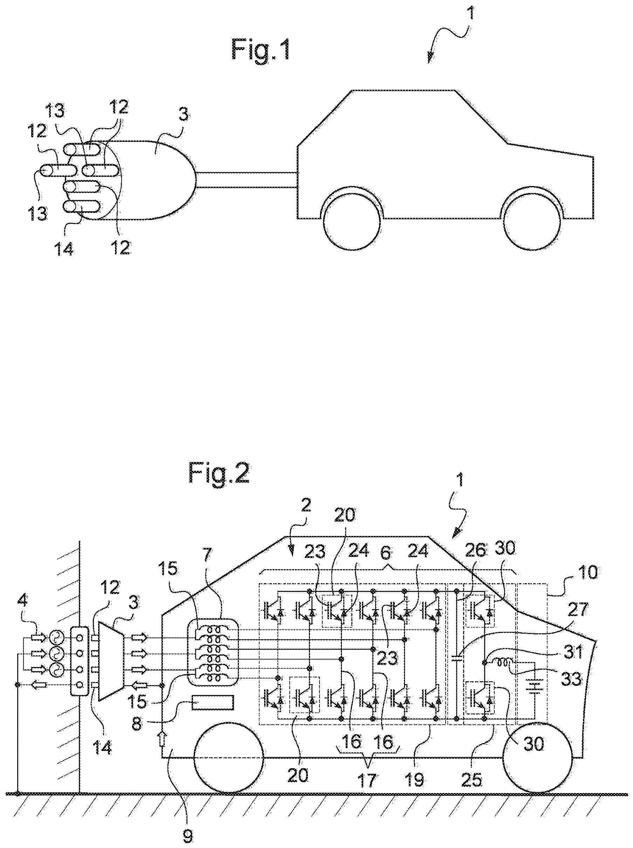

On a représenté à la figure 1 un véhicule 1 dans lequel peut être embarqué un circuit électrique 2 selon un exemple de mise en oeuvre de l'invention. Le véhicule 1 est par exemple une automobile à propulsion hybride ou exclusivement électrique.

Un exemple de circuit électrique 2 est représenté sur la figure 2. Comme on peut le voir, ce circuit 2 peut comprendre un connecteur 3 destiné à être branché à un réseau électrique 4 via un connecteur d'un poste de charge en énergie électrique 5, un système de commutation 6, des inductances 7, une unité de commande 8 et une unité de stockage d'énergie électrique 10.

Le réseau électrique 4 est dans cet exemple un réseau triphasé mais l'invention s'applique à des réseaux polyphasés autres que triphasés. Il s'agit par exemple d'un réseau industriel géré par un opérateur et déployé à une échelle régionale, nationale ou internationale. Le réseau délivre par exemple une tension de fréquence égale à 50 Hz ou 60 Hz.

Dans l'exemple de la figure 1, le connecteur 3 comprend cinq contacts. Quatre contacts principaux 12 présentent chacun une extrémité libre 13 visible sur la figure 1 et destinée à être branchée au contact de type complémentaire du connecteur du poste de charge 5. Le cinquième contact 14 du connecteur 3 est relié à la carrosserie 9 du véhicule 1 et destiné à être branché à la terre du réseau électrique 4, comme représenté sur la figure 2.

Comme on peut le voir, chaque contact principal 12 peut avoir une autre extrémité reliée aux inductances 7. Dans l'exemple de la figure 2, cette extrémité est reliée à un point milieu 15 d'une inductance 7, c'est-à-dire que cette liaison avec le contact 12 sépare l'inductance 7 en un nombre exactement égal de spires.

Chacune des inductances 7 est ainsi partagée en deux demi-bobines parcourues par des courants opposés d'une demi-bobine d'une inductance à l'autre demi-bobine de cette même inductance.

Dans l'exemple représenté sur la figure 2, le système de commutation 6 comprend six bras 16. Ces bras 16 sont appariés pour former trois ponts en H 17. Chaque bras 16 comprend dans l'exemple décrit deux cellules de commutation 20 séparées par un point médian 21. Chaque inductance 7 est dans l'exemple considéré interposée entre deux points médians 21 de deux bras 16 d'un pont 17. Ces bras 16 jouent dans l'exemple de la figure 2 le rôle d'un onduleur 19.

Chaque cellule de commutation 20 peut comprendre un montage antiparallèle d'un interrupteur commandable 23 et d'une diode 24. L'interrupteur commandable 23 est par exemple un transistor, notamment un transistor à effet de champ. Les cellules de commutation 20 sont par exemple toutes identiques.

Le système de commutation 6 comprend encore dans l'exemple considéré un convertisseur de tension continue/continue 25 et un bus continu 26 monté en parallèle des bras 16. Un condensateur 27 est disposé dans ce bus continu 26. Le bus continu 26 constitue dans l'exemple de la figure 2 l'entrée du convertisseur 25 qui est un hacheur série réalisant une fonction de dévoltage. La sortie de ce hacheur est formée par l'unité de stockage d'énergie électrique 10. Cette dernière est par exemple une batterie ou une association en parallèle et/ou en série de batteries. L'unité de stockage d'énergie électrique a dans l'exemple considéré une tension nominale comprise entre 200 V et 400 V.

De façon connue, le hacheur série comprend deux cellules de commutation 30 identiques ou non aux cellules de commutation 20 du système de commutation 6 et séparées par un point médian 31. Chacune de ces cellules 30 est dans l'exemple considéré réversible, comprenant en antiparallèle un interrupteur commandable et une diode. Une inductance 33 est interposée entre ce point médian 31 et l'unité de stockage d'énergie 10.

L'unité de commande 8 comporte notamment des moyens de traitement numérique, par exemple un ou plusieurs microcontrôleurs ou un circuit logique programmable. L'unité de commande 8 peut être configurée pour commander les interrupteurs des cellules de commutation 20 et 30 ci-dessus en ouverture et en fermeture de manière à ce que l'unité de stockage d'énergie 10 soit chargée par le réseau électrique 4 auquel est branché le connecteur 3. Dans un souci de clarté du dessin, les liaisons entre l'unité de commande 8 et chaque cellule de commutation 20 ou 30 n'ont pas été représentées.

L'unité de commande 8 peut encore permettre de déterminer si la tension ou le courant délivré par le réseau 4 est continu ou alternatif.

Dans l'exemple de la figure 2, les cellules de commutation 20 et les cellules de commutation 30 sont commandées de manière à ce que la tension alternative triphasée délivrée par le réseau 4 soit convertie en une tension continue de valeur sensiblement égale à la valeur de tension nominale de l'unité de stockage d'énergie 10.

Tous les bras 16 du système de commutation 6 sont par exemple commandés selon une commande PWM afin de réaliser la fonction Power Factor Corrector (PFC) et les courants de charge peuvent être équilibrés entre chaque demi-bobine de chaque inductance 7.

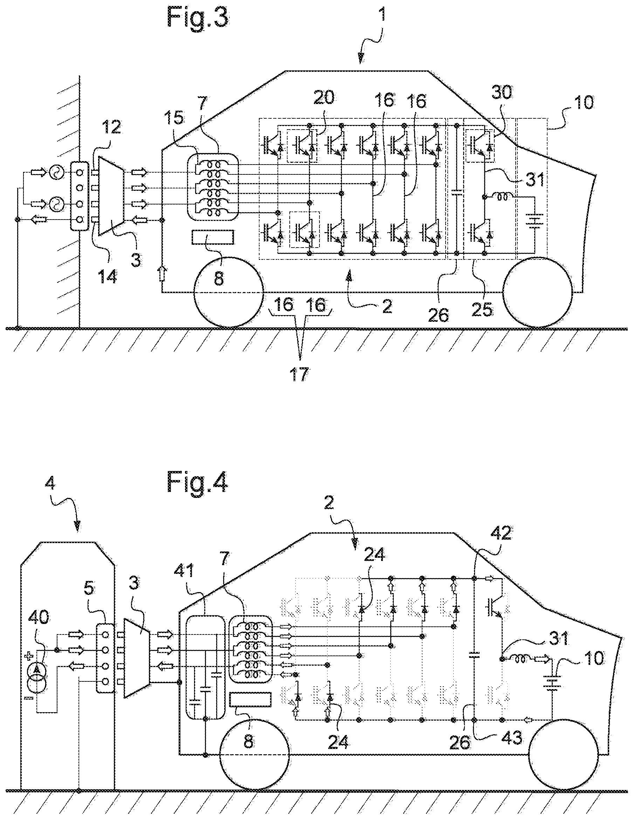

On va maintenant décrire en référence à la figure 3 un autre exemple d'utilisation du circuit 2 décrit en référence à la figure 2. Dans l'exemple de la figure 3, le réseau électrique 4 délivre une tension monophasée. L'un des contacts 12 est branché à la phase du réseau 4 tandis qu'un autre contact 12 est branché au neutre du réseau 4. Lorsque le connecteur 3 comporte quatre contacts principaux 12, le contact principal 12 branché au neutre est distinct des contacts principaux 12 branchés à chaque phase d'un réseau triphasé. Lorsque le connecteur 3 ne comprend que trois contacts principaux 12, l'un de ces derniers, qui est branché à l'une des phases en triphasé, est utilisé pour le branchement au neutre du réseau monophasé.

Dans l'exemple de la figure 3, les cellules de commutation 20 et 30 du système de commutation 6 sont commandées par l'unité de commande 8, le cas échéant après que celle-ci a détecté que le réseau 4 délivre une tension monophasée, de manière à ce que la tension alternative monophasée délivrée par le réseau 4 soit convertie en une tension continue de valeur sensiblement égale à la valeur de tension nominale de l'unité de stockage d'énergie 10.

La commande des cellules de commutation 20 et/ou 30 dans le cas des figures 2 et 3 est par exemple décrite dans la publication déjà citée "A New On Board Fast Battery Charger " International Conference & Exhibition Autmotive Power Electronics April 2011 Proceedings Ref: 2011 -01

L'exemple de la figure 4 correspond à l'utilisation du circuit 2 pour la charge de l'unité de stockage d'énergie 10 par un réseau 4 délivrant un courant continu.

Le poste de charge 5 comprend dans cet exemple une électronique de puissance permettant le contrôle du courant délivré par une source de courant 40 du réseau électrique 4. Dans cet exemple, un filtre aux hautes fréquences 41 formé par des condensateurs montés entre chaque contact principal 12 et la terre peut être ajouté.

Comme représenté sur la figure 4, la borne positive du réseau 4 peut être reliée à deux contacts du connecteur du poste de charge 5 tandis que la borne négative du réseau 4 n'est reliée qu'à un seul contact de ce connecteur. Lors du branchement du connecteur 3 du circuit 2 au poste de charge 5, deux contacts principaux 12 du connecteur 3 sont par exemple branchés aux contacts du connecteur du poste de charge 5 reliés à la borne positive du réseau 4 et un autre contact principal 12 du connecteur est branché au contact du connecteur du poste de charge 5 relié à la borne négative du réseau 4. Le contact additionnel 14 peut être branché à la terre du réseau 4.

Le cas échéant après détection du fait que le réseau 4 délivre un courant continu, l'unité de commande 8, commande les cellules de commutation 20 et 30 pour permettre d'appliquer aux bornes de l'unité de stockage d'énergie 10 la tension adéquate à partir du courant délivré par le réseau 4.

Les interrupteurs commandables des cellules 20 et 30 sont par exemple commandés de manière à ce que les portions représentées en grisé sur la figure 4 ne soient pas parcourues par du courant et de manière à ce que les portions représentées en noir sur cette même figure 4 le soient. Comme on peut le voir, ces buts sont notamment atteints en empêchant le passage du courant dans chaque interrupteur commandable 23 des cellules 20 des ponts en H 17.

Pour chacun des bras 16 connectés à la borne positive du réseau 4, le courant gagne depuis le réseau électrique 4 la borne positive 42 du bus continu 26 par les diodes 24 et, pour chacun des bras 16 connectés à la borne négative du réseau 4, le courant regagne le réseau 4 depuis la borne négative 43 du bus continu 26 par les diodes 24. Pour cela, tous les interrupteurs commandables 23 des ponts 17 sont fermés.

L'interrupteur commandable de la cellule de commutation 30 du convertisseur 26 disposée entre la borne positive 42 du bus continu 26 et le point médian 31 est commandé pour permettre sa traversée par le courant alimentant l'unité de stockage d'énergie 10 tandis que l'interrupteur commandable de la cellule de commutation 30 disposée entre le point médian 31 et la borne négative 43 du bus continu 26 est commandé de manière à ce que cette cellule 30 ne permette pas le passage de courant.

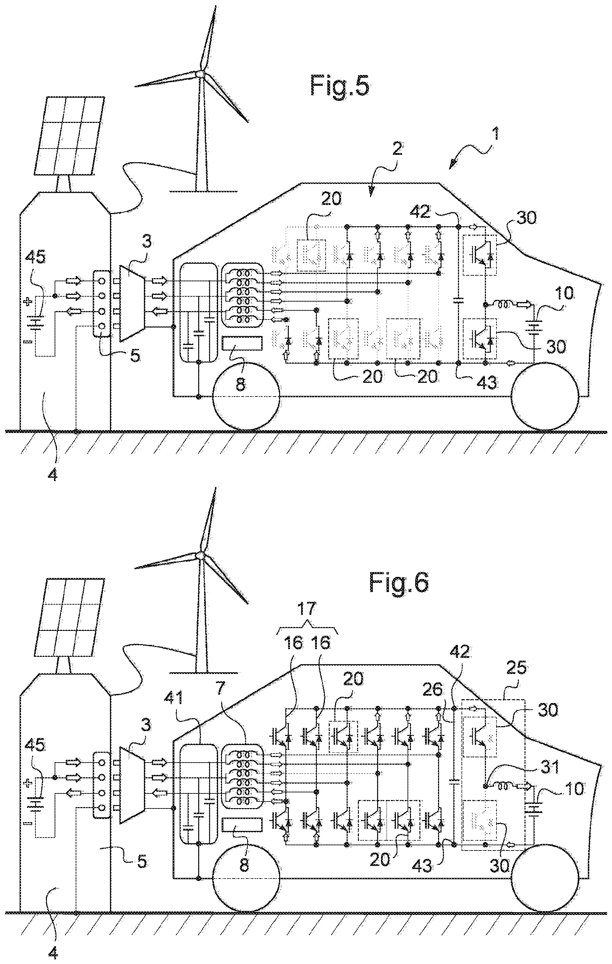

Les figures 5 et 6 correspondent à l'utilisation du circuit 2 pour la charge de l'unité de stockage d'énergie 10 par un réseau 4 délivrant une tension continue. Le poste de charge 5 peut dans ce cas être dépourvu d'électronique de contrôle de courant. Le branchement du connecteur 3 au réseau 4 peut être effectué de la même façon que ce qui a été décrit en référence à la figure 4.

La figure 5 correspond au cas où la valeur de la tension délivrée par la source de tension continue 45 du réseau 4 est supérieure à la valeur nominale de la tension aux bornes de l'unité de stockage d'énergie 10. Dans ce cas, les cellules de commutation 20 et 30 du système de commutation 4 sont commandées de manière à dévolter la tension appliquée par le réseau 4.

Ce but est par exemple atteint en commandant les interrupteurs commandables des cellules 20 et 30 de manière à ce que les portions en grisé du circuit 2 ne soient pas parcourues par un courant et de manière à ce que les portions en noir le soient. Tous les interrupteurs commandables 23 sont par exemple commandés en fermeture.

La figure 6 correspond au cas où la valeur de la tension délivrée par la source de tension continue 45 du réseau 4 est inférieure à la valeur nominale de la tension aux bornes de l'unité de stockage d'énergie 10. Dans ce cas, les cellules de commutation 20 et 30 du système de commutation 4 sont commandées de manière à survolter la tension appliquée par le réseau 4.

Ce but est par exemple atteint en commandant les interrupteurs commandables des cellules 20 et 30 de manière à ce que les portions en grisé du circuit 2 ne soient pas parcourues par un courant et de manière à ce que les portions en noir le soient. La cellule de commutation 30 du convertisseur 25 disposée entre la borne positive 42 du bus continu 26 et le point médian 31 est par exemple commandée de manière à permettre le passage de courant à travers l'interrupteur commandable mais non à travers la diode et l'autre cellule de commutation du convertisseur 25 est commandée de manière à empêcher sa traversée par un courant.

Dans une autre variante, on peut commander les cellules de commutation 20 et 30 du système de commutation pour dévolter et survolter en alternance la tension délivrée par le réseau 4. Une telle commande peut permettre de répondre à des problématiques en termes de régulation ou de résonance entre les inductances 7 et le condensateur 26.

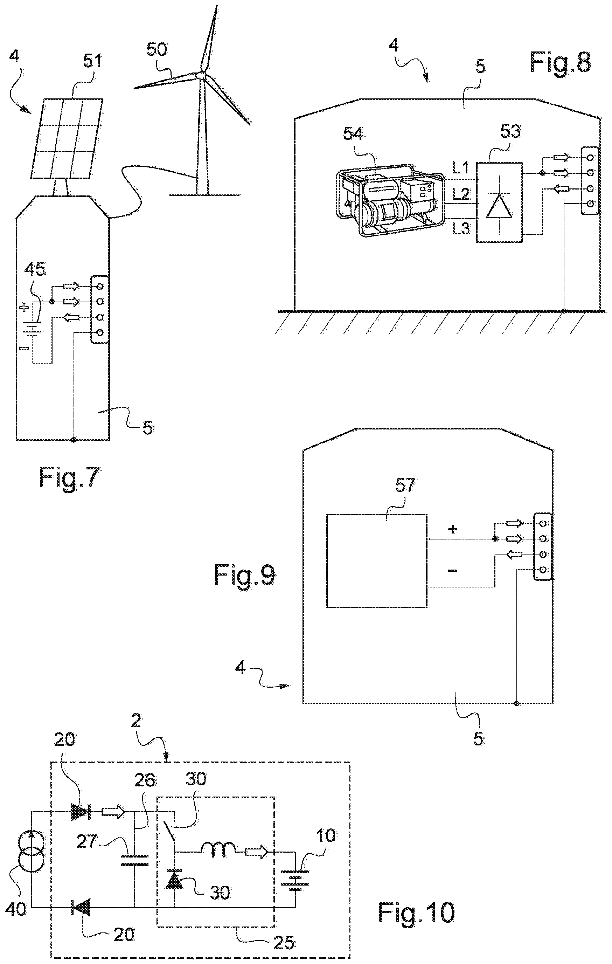

On va maintenant décrire, en référence aux figures 7 à 9 des exemples de réseaux 4 délivrant une tension continue auxquels le connecteur 3 du circuit 2 peut être branché. Il peut s'agir de réseaux locaux et/ou privés comprenant une batterie 45 alimentée par une ou plusieurs sources telles qu'une ou plusieurs éoliennes 50 et/ou un ou plusieurs panneaux solaires 51, comme représenté sur la figure 7.

En variante, la batterie 45 peut être alimentée via un redresseur 53 par une génératrice 54 fonctionnant à l'aide d'énergie fossile, comme du gaz, du pétrole ou un biocarburant, comme représenté sur la figure 8.

En variante encore, la batterie peut être alimentée par d'autres sources, telles que des piles à combustible 57, comme représenté sur la figure 9.

Dans une autre variante non représentée, la source de tension continue 45 correspond à la sortie d'un redresseur triphasé recevant en entrée une tension alternative triphasée délivrée par un réseau électrique industriel.

On va maintenant décrire en référence à la figure 10 un autre aspect de l'invention, pouvant être combiné ou non au circuit universel de charge 2 qui vient d'être décrit en référence aux figures 1 à 9. Comme décrit en référence à la figure 4, l'invention permet d'utiliser le circuit 2 non seulement pour une charge par un réseau triphasé ou monophasé mais également pour une charge par un courant continu, entre autres. Dans ce dernier cas, le poste de charge 5 impose la valeur du courant utilisé pour charger l'unité de stockage d'énergie 10. Le courant délivré par le poste de charge 5 traverse, comme représenté sur la figure 4, des inductances 7 et des interrupteurs des cellules de commutation 20 pour charger l'unité de stockage d'énergie 10.

Du fait de la valeur relativement élevée du courant délivré par le poste de charge 5, des pertes peuvent se produire dans ces cellules de commutation 20 et dans les inductances 7. Diminuer la valeur du courant délivré par le réseau électrique 4 est souhaitable mais cette diminution ne doit cependant que peu, voire pas, affecter la valeur du courant traversant l'unité de stockage d'énergie électrique 10.

Le circuit équivalent au circuit 2 représenté sur la figure 4 est représenté sur la figure 10.

En négligeant les pertes, et donc en considérant que toute la puissance électrique délivrée par le réseau 4 est transférée à l'unité de stockage d'énergie électrique 10, on obtient l'équation ci-dessous, où $V_{BAT}$ et $I_{BAT}$ désignent respectivement la tension aux bornes de l'unité de stockage d'énergie électrique 10 et le courant parcourant ladite unité de stockage d'énergie électrique 10, et où $V_{DC}$ et $I_{SOURCE}$ désignent respectivement la tension du bus continu 26 et le courant délivré par le réseau continu 4 :

$$I_{SOURCE} = \frac{V_{BAT}}{V_{DC}} I_{BAT}$$

Il ressort de cette équation que la valeur du courant $I_{SOURCE}$ délivré par le réseau 4 est inversement proportionnelle à la valeur de la tension du bus continu 26 $V_{DC}$. En conséquence, on peut contrôler la valeur de ce courant $I_{SOURCE}$ à l'aide de la tension $V_{DC}$.

Le poste de charge 5 est par exemple dimensionné pour supporter entre ses bornes une valeur maximale de tension et la commande par l'unité de commande 8 des cellules de commutation 20 et 30 permet d'élever la valeur de la tension aux bornes du poste de charge 5 pour qu'elle soit proche de cette valeur maximale, sans modifier la valeur de la tension aux bornes de l'unité de stockage d'énergie électrique 10. Pour ce faire, le convertisseur 25 peut fonctionner en dévolteur.

La commande représentée sur la figure 5 pour un réseau 4 délivrant une tension continue de valeur supérieure à la valeur de la tension nominale aux bornes de l'unité de stockage d'énergie électrique 10 peut ainsi être appliquée dans le cas où le circuit 2 est chargé par un réseau 4 délivrant un courant continu dont on souhaite réduire la valeur.

Dans le cas présent, afin de réduire les pertes dans les interrupteurs des cellules de commutation 20 et dans les inductances 7, comme mentionné ci-dessus, l'unité de commande 8 peut, après avoir détecté que le réseau 4 délivre un courant continu ou après avoir reçu cette information, commander les cellules de commutation 20 et 30 de manière à diminuer la valeur du courant I$_{SOURCE}$ en amont du bus continu 26 en augmentant la tension V$_{DC}$ du bus continu 26 et la tension aux bornes du poste de charge 5.

A titre d'exemple, avec une unité de stockage d'énergie 10 ayant une tension nominale de l'ordre de 240 Vdc et absorbant un courant de 100A, la commande des cellules de commutation 20 et 30 selon ce qui a été décrit en référence à la figure 4 fait que chaque diode 24 d'une cellule de commutation 20 d'un bras 16 et chaque demi-bobine d'une inductance 7 est parcourue par un courant retournant vers le réseau 4 dont la valeur est de 50A. En considérant une chute de tension aux bornes de chaque diode de l'ordre de 2V et une résistance de 0,1Ω pour chaque demi-bobine, les pertes sont respectivement de 100W et de 250W par diode et par demi-bobine.

En commandant les cellules de commutation 20 et 30 comme représenté sur la figure 5, pour augmenter la tension du bus continu 26 à une valeur proche de 500 Vdc, la valeur du courant délivré par le réseau 4 est abaissée à 48 A, conformément à l'équation ci-dessus.

Chaque diode et chaque demi-bobine par lesquelles s'effectue le retour de courant de l'unité de stockage d'énergie 10 vers le réseau 4 est alors parcourue par un courant de 24 A, ce qui correspond respectivement à des pertes de 48 W et de 58 W.

Cet aspect de l'invention permet ainsi de modifier la valeur du courant I$_{SOURCE}$ délivré par le poste de charge 5, sans que cette modification ne se fasse à l'initiative du poste de charge 5.

L'invention n'est pas limitée aux exemples qui viennent d'être décrits. En particulier, l'échange d'énergie électrique depuis l'unité de stockage d'énergie 10 vers le réseau 4 est possible.

L'invention permet notamment de disposer d'un circuit électrique 2 permettant à la fois l'alimentation d'un moteur électrique pour la propulsion d'un véhicule à partir d'une unité de stockage d'énergie électrique et la charge de cette unité de stockage d'énergie électrique à partir de l'un quelconque des réseaux électriques suivants :

- un réseau alternatif monophasé délivrant une tension comprise entre 100 Vac et 240 Vac, par exemple 120 Vac, à des fréquences comprises entre 45 Hz et 65 Hz,
- un réseau alternatif triphasé délivrant une tension comprise entre 208 Vac et 400 Vac, à des fréquences comprises entre 45 Hz et 65 Hz,
- un réseau continu délivrant une tension supérieure à 200 Vdc, par exemple comprise entre 200 et 400 Vdc.

L'expression "comportant un" doit être comprise comme signifiant « comportant au moins un », sauf lorsque le contraire est spécifié.

**Revendications**

1. Procédé d'échange d'énergie électrique entre un réseau électrique (4) véhiculant l'une quelconque d'une grandeur électrique d'alimentation continue et d'une grandeur électrique d'alimentation alternative, et une unité de stockage d'énergie électrique (10) pour véhicule (1) hybride ou électrique, l'unité de stockage (10) faisant partie d'un circuit électrique (2) comprenant en outre :

    - un système de commutation (6) comprenant une pluralité de cellules de commutation commandables (20 ; 30),
    - une pluralité d'inductances (7), et
    - un connecteur (3) permettant de brancher le circuit électrique (2) à un connecteur dudit réseau électrique (4),

    le procédé comportant les étapes selon lesquelles :

    - on branche le connecteur (3) du circuit électrique (2) au connecteur dudit réseau (4), et
    - on commande les cellules de commutation (20 ; 30) en fonction de ce que la grandeur électrique d'alimentation véhiculée par le réseau électrique (4) est continue ou alternative, pour permettre l'échange d'énergie électrique entre l'unité de stockage d'énergie électrique (10) et le réseau électrique (4).

2. Procédé selon la revendication 1, dans lequel on détermine si le réseau électrique (4) véhicule une grandeur électrique continue ou alternative.

3. Procédé selon la revendication 1 ou 2, dans lequel chaque cellule de commutation (20 ; 30) est formée par un montage antiparallèle d'un interrupteur commandable (23) et d'une diode (24).

4. Procédé selon l'une quelconque des revendications 1 à 3, dans lequel le système de commutation (6) comporte une pluralité de bras (16) ayant chacun au moins deux cellules de commutation commandables (20) et dans lequel chaque inductance (7) est interposée entre deux desdits bras (16).

**5.** Procédé selon la revendication 4, dans lequel le connecteur (3) comprend une pluralité de contacts principaux (12) ayant chacun une extrémité libre (13) destinée à être branchée à un contact du connecteur du réseau électrique (4) et une autre extrémité reliée à un point intermédiaire (15) d'une des inductances (7).

**6.** Procédé selon la revendication 5, dans lequel le connecteur (3) comporte au moins trois contacts principaux (12) et un contact additionnel (14) ayant une extrémité libre destinée à être branchée à la terre du connecteur du réseau électrique (4) et une autre extrémité destinée à être reliée à la carrosserie (9) du véhicule (1).

**7.** Procédé selon la revendication 6, dans lequel :

- le réseau électrique (4) est un réseau véhiculant une tension alternative triphasée et dans lequel on branche chaque contact principal (12) à une phase du réseau électrique et le contact additionnel à la terre du réseau, ou
- le réseau électrique (4) est un réseau véhiculant une tension alternative monophasée et dans lequel on branche un contact principal (12) à la phase du réseau (4), un autre contact principal (12) au neutre du réseau (4) et le contact additionnel à la terre du réseau (4).

**8.** Procédé selon la revendication 6, dans lequel le réseau électrique (4) véhicule, entre une borne positive et une borne négative, une tension continue ou un courant continu et dans lequel on branche :

- deux contacts principaux (12) à l'une de la borne positive et de la borne négative,
- le troisième contact principal (12) à l'autre de la borne positive et de la borne négative.

**9.** Procédé selon la revendication 8, dans lequel le réseau électrique (4) véhicule, entre la borne positive et la borne négative, un courant continu, et. dans lequel :

- les cellules de commutation (20) des bras (16) reliés au(x) contact(s) (12) branché(s) à la borne positive du réseau électrique (4) sont commandées de manière à permettre la circulation de courants du réseau (4) vers l'unité de stockage (10), et
- les cellules de commutation (20) des bras (16) reliés au(x) contact(s) (12) branché(s) à la borne négative du réseau électrique (4) sont commandées de manière à permettre le retour de courants vers le réseau électrique (4).

**10.** Procédé selon la revendication 9, dans lequel le système de commutation (6) comprend :

- un bus continu (26) monté en parallèle des bras (16), et
- un convertisseur de tension continue/continue (25) comprenant au moins deux cellules de commutation (30) et interposé entre le bus continu (26) et l'unité de stockage d'énergie (10), procédé dans lequel, la tension aux bornes de l'unité de stockage d'énergie (10) restant constante, on commande les cellules de commutation (20) des bras (16) et/ou les cellules de commutation (30) du convertisseur de tension continue/continue (25) de manière à augmenter la valeur de la tension du bus continu (26).

**11.** Procédé selon la revendication 8, dans lequel le réseau électrique (4) véhicule, entre la borne positive et la borne négative, une tension continue.

**12.** Procédé selon la revendication 11, dans lequel le système de commutation (6) comporte :

- un bus continu (26) monté en parallèle des bras (16) du système de commutation (6), et
- un convertisseur de tension continue/continue (25) comprenant au moins deux cellules de commutation (30) et interposé entre le bus continu (26) et l'unité de stockage d'énergie (10), procédé dans lequel on commande les cellules de commutation (20) des bras (16) et/ou les cellules de commutation (30) du convertisseur de tension continue/continue (25) pour adapter la valeur de la tension du réseau (4) à la valeur de tension nominale aux bornes de l'unité de stockage d'énergie électrique (10).

**13.** Circuit électrique (2) pour l'échange d'énergie électrique entre un réseau électrique (4) et une unité de stockage d'énergie électrique (10) d'un véhicule hybride ou électrique (1), comprenant :

- une unité de stockage d'énergie électrique (10),
- un système de commutation (6) comprenant une pluralité de cellules de commutation commandables (20 ; 30) et une unité de commande (8) de ces cellules de commutation (20 ;30),
- une pluralité d'inductances (7), et
- un unique connecteur (3) configuré pour être branché à un réseau électrique (4) véhiculant l'une quelconque d'une grandeur électrique d'alimentation continue et d'une grandeur électrique d'alimentation alternative,

l'unité de commande (8) du système de commutation (6) étant configurée pour commander les cellules de commutation (20 ; 30) en fonction de ce que la grandeur électrique d'alimentation véhiculée par le réseau électrique (4) est continue ou alternative.

**Patentansprüche**

1. Verfahren zum Austausch elektrischer Energie zwischen einem elektrischen Netz (4) zur Beförderung einer beliebigen von einer Gleichstromgröße und von einer Wechselstromgröße und einer Speichereinheit elektrischer Energie (10) für Hybrid- oder Elektrofahrzeug (1), wobei die Speichereinheit (10) Teil eines Stromkreises (2) ist, der ferner umfasst:

    - ein Umschaltsystem (6), umfassend eine Vielzahl steuerbarer Umschaltzellen (20; 30),
    - eine Vielzahl von Induktanzen (7), und
    - einen Verbinder (3), der erlaubt, den Stromkreis (2) an einen Verbinder des elektrischen Netzes (4) anzuschließen,

    wobei das Verfahren die Schritte aufweist, gemäß denen:

    - der Verbinder (3) des Stromkreises (2) an den Verbinder des Netzes (4) angeschlossen wird, und
    - die Umschaltzellen (20; 30) in Abhängigkeit davon gesteuert werden, ob die elektrische Versorgungsgröße, die von dem elektrischen Netz (4) befördert wird, gleich oder wechselnd ist, um den Austausch elektrischer Energie zwischen der Speichereinheit elektrischer Energie (10) und dem elektrischen Netz (4) zu ermöglichen.

2. Verfahren nach Anspruch 1, wobei bestimmt wird, ob das elektrische Netz (4) eine gleiche oder wechselnde elektrische Größe befördert.

3. Verfahren nach Anspruch 1 oder 2, wobei jede Umschaltzelle (20; 30) von einer antiparallelen Montage eines steuerbaren Schalters (23) und einer Diode (24) gebildet ist.

4. Verfahren nach einem der Ansprüche 1 bis 3, wobei das Umschaltsystem (6) eine Vielzahl von Armen (16) aufweist, von denen jeder mindestens zwei steuerbare Umschaltzellen (20) hat und wobei jede Induktanz (7) zwischen zwei Armen (16) zwischengestellt ist.

5. Verfahren nach Anspruch 4, wobei der Verbinder (3) eine Vielzahl von Hauptkontakten (12) umfasst, die jeder ein freies Ende (13) haben, das zum Anschließen an einen Kontakt des Verbinders des elektrischen Netzes (4) bestimmt ist, und ein anderes Ende, das mit einem Vermittlungspunkt (15) einer der Induktanzen (7) verbunden ist.

6. Verfahren nach Anspruch 5, wobei der Verbinder (3) mindestens drei Hauptkontakte (12) und einen zusätzlichen Kontakt (14) mit einem freien Ende aufweist, das zum Anschluss an die Erde des Verbinders des elektrischen Netzes (4) bestimmt ist, und ein anderes Ende, das zur Verbindung mit der Karosserie (9) des Fahrzeugs (1) bestimmt ist.

7. Verfahren nach Anspruch 6, wobei

    - das elektrische Netz (4) ein Netz ist, das eine Dreiphasen-Wechselspannung befördert und wobei jeder Hauptkontakt (12) an eine Phase des elektrischen Netzes und der zusätzliche Kontakt an die Erde des Netzes angeschlossen wird, oder
    - das elektrische Netz (4) ein Netz ist, das eine Einphasen-Wechselspannung befördert und wobei ein Hauptkontakt (12) an die Phase des Netzes (4), ein anderer Hauptkontakt (12) an den neutralen Leiter des Netzes (4) und der zusätzliche Kontakt an die Erde des Netzes (4) angeschlossen wird.

8. Verfahren nach Anspruch 6, wobei das elektrische Netz (4) zwischen einer positiven Klemme und einer negativen Klemme eine Gleichspannung oder einen Gleichstrom befördert und wobei angeschlossen werden:

    - zwei Hauptkontakte (12) an die eine von der positiven Klemme und von der negativen Klemme,
    - der dritte Hauptkontakt (12) an die andere von der positiven Klemme und von der negativen Klemme.

9. Verfahren nach Anspruch 8, wobei das elektrische Netz (4) zwischen der positiven Klemme und der negativen Klemme einen Gleichstrom befördert, und wobei

    - die Umschaltzellen (20) der Arme (16), die mit dem/den Kontakt/en (12) verbunden sind, die an die positive Klemme des elektrischen Netzes (4) angeschlossen ist/sind, derart gesteuert werden, dass das Fließen von Strömen des Netzes (4) zu der Speichereinheit (10) erlaubt wird, und
    - die Umschaltzellen (20) der Arme (16), die mit dem/den Kontakt/en (12) verbunden sind, die an die negative Klemme des elektrischen Netzes (4) angeschlossen ist/sind, derart gesteuert werden, dass die Rückkehr von Strömen zum elektrischen Netz (4) erlaubt wird.

**10.** Verfahren nach Anspruch 9, wobei das Umschaltsystem (6) umfasst:

- einen DC-Bus (26), der parallel zu den Armen (16) montiert ist, und
- einen Gleichspannungs-/Gleichspannungs-Wandler (25), der mindestens zwei Umschaltzellen (30) umfasst und zwischen dem DC-Bus (26) und der Energiespeichereinheit (10) zwischengestellt ist, wobei bei dem Verfahren, indem die Spannung an den Klemmen der Energiespeichereinheit (10) konstant bleibt, die Umschaltzellen (20) der Arme (16) und/oder die Umschaltzellen (30) des Gleichspannungs-/Gleichspannungs-Wandlers (25) derart gesteuert werden, dass der Wert der Spannung des DC-Bus (26) erhöht wird.

**11.** Verfahren nach Anspruch 8, wobei das elektrische Netz (4) zwischen der positiven Klemme und der negativen Klemme eine Gleichspannung befördert.

**12.** Verfahren nach Anspruch 11, wobei das Umschaltsystem (6) aufweist:

- einen DC-Bus (26), der parallel zu den Armen (16) des Umschaltsystems (6) montiert ist, und
- einen Gleichspannungs-/Gleichspannungs-Wandler (25), der mindestens zwei Umschaltzellen (30) umfasst und zwischen dem DC-Bus (26) und der Energiespeichereinheit (10) zwischengestellt ist, wobei bei dem Verfahren die Umschaltzellen (20) der Arme (16) und/oder die Umschaltzellen (30) des Gleichspannungs-/Gleichspannungs-Wandlers (25) gesteuert werden, um den Wert der Spannung des Netzes (4) an den Nennspannungswert an den Klemmen der Speichereinheit elektrischer Energie (10) anzupassen.

**13.** Stromkreis (2) für den Austausch elektrischer Energie zwischen einem elektrischen Netz (4) und einer Speichereinheit elektrischer Energie (10) eines Hybrid- oder Elektrofahrzeugs (1), umfassend:

- eine Speichereinheit elektrischer Energie (10),
- ein Umschaltsystem (6), umfassend eine Vielzahl steuerbarer Umschaltzellen (20; 30) und eine Steuereinheit (8) dieser Umschaltzellen (20; 30),
- eine Vielzahl von Induktanzen (7), und
- einen einzigen Verbinder (3), der konfiguriert ist, um an ein elektrisches Netz (4) angeschlossen zu sein, welches eine beliebige von einer Gleichstromversorgungsgröße und einer Wechselstromversorgungsgröße befördert,

wobei die Steuereinheit (8) des Umschaltsystems (6) konfiguriert ist, um die Umschaltzellen (20; 30) in Abhängigkeit davon zu steuern, ob die von dem elektrischen Netz (4) beförderte elektrische Versorgungsgröße gleich oder wechselnd ist.

**Claims**

**1.** Method for exchanging electric power between a power grid (4) carrying any one of a direct current electrical variable and an alternating current electrical variable, and a power storage unit (10) for a hybrid or electric motor vehicle (1), the storage unit (10) being part of an electrical circuit (2) that further comprises:

- a switching system (6) comprising a plurality of controllable switching cells (20; 30),
- a plurality of inductors (7), and
- a connector (3) enabling to connect the electrical circuit (2) to a connector of the said power grid (4),

the method comprising the following steps:

- the connector (3) of the electrical circuit (2) is connected to the connector of said power grid (4), and
- the switching cells (20; 30) are controlled on the basis of the electrical variable supplied by the power grid (4), namely either direct current or alternating current, thereby allowing electric power exchange between the power storage unit (10) and the power grid (4).

**2.** Method according to claim 1, wherein it is determined whether the power grid (4) carries a direct current electrical variable or an alternating current electrical variable.

**3.** Method according to claim 1 or 2, wherein each switching cell (20; 30) is formed by means of an antiparallel arrangement of a controllable switch (23) and a diode (24).

**4.** Method according to any of claims 1 to 3, wherein the switching system (6) comprises a plurality of arms (16) each having at least two controllable switching cells (20) and in which each inductor (7) is fitted in between two of the said arms (16).

**5.** Method according to claim 4, wherein the connector (3) comprises a plurality of main contacts (12) each having a free end (13) designed to be connected to a contact of the connector of the power grid (4) and another end connected to a middle point (15) of one of the inductors (7).

**6.** Method according to claim 5, wherein the connector (3) comprises at least three main contacts (12) and an additional contact (14) with a free end designed to be connected to the grounding of the connector of the power grid (4) and another end designed to be connected to the body (9) of the vehicle (1).

**7.** Method according to claim 6, wherein:

- the power grid (4) is one grid carrying a three-phase alternating current and wherein each main contact (12) is connected to a phase of the power grid and the additional contact is connected to the grounding of the power grid, or
- the power grid (4) is one grid carrying a single-phase alternating current and wherein a main contact (12) is connected to the phase of the power grid (4), another main contact (12) is connected to a neutral conductor of the power grid (4) and the additional contact is connected to the grounding of the power grid (4).

**8.** Method according to claim 6, wherein the power grid (4) carries a direct current or an alternating current between a positive terminal and a negative terminal and wherein:

- two main contacts (12) are connected to one of the positive terminal and the negative terminal,
- the third main contact (12) is connected to the other of the positive terminal and the negative terminal.

**9.** Method according to claim 8, wherein the power grid (4) carries a direct current between the positive terminal and the negative terminal, and wherein:

- the switching cells (20) of the arms (16) connected to the contact(s) (12) connected to the positive terminal of the power grid (4) are controlled in a manner that allows current from the power grid (4) to flow into the storage unit (10), and
- the switching cells (20) of the arms (16) connected to the contact(s) (12) connected to the negative terminal of the power grid (4) are controlled in a manner that allows current to return to the power grid (4).

**10.** Method according to claim 9, wherein the switching system (6) comprises:

- a direct current bus (26) mounted parallel to the arms (16), and
- a DC-to-DC converter (25) comprising at least two switching cells (30) and fitted in between the direct current bus (26) and the storage unit (10), a method wherein, with a constant voltage at the terminals of the power storage unit (10), the switching cells (20) on the arms (16) and/or the switching cells (30) of the DC-to-DC converter (25) are controlled in a manner to increase the voltage delivered by the direct current bus (26).

**11.** Method according to claim 8, wherein the power grid (4) carries a direct current between the positive terminal and the negative terminal.

**12.** Method according to claim 11, wherein the switching system (6) comprises:

- a direct current bus (26) mounted parallel to the arms (16) of the switching system (6), and
- a DC-to-DC converter (25) comprising at least two switching cells (30) and fitted in between the direct current bus (26) and the power storage unit (10), method wherein the switching cells (20) of the arms (16) and/or the switching cells (30) of the DC-to-DC converter (25) are controlled in a manner to adjust the voltage in the power grid (4) to the nominal voltage at the terminals of the power storage unit (10).

**13.** Electrical circuit (2) for exchanging electric power between a power grid (4) and a power storage unit (10) of a hybrid or an electric motor vehicle (1), which comprises:

- a power storage unit (10),
- a switching system (6) comprising a plurality of controllable switching cells (20; 30) and a control unit (8) of these switching cells (20; 30),
- a plurality of inductors (7), and
- a single connector (3) designed to be connected to a power grid (4) carrying any direct current electrical variable and any alternating current electrical variable,

the control unit (8) of the switching system (6) being designed to control the switching units (20; 30) on the basis of the electrical variable supplied by the power grid (4), namely either direct current or alternating current.

## Fig.1

## Fig.2

## Fig.3

## Fig.4

EP 2 794 343 B1

Fig.5

Fig.6

17

Fig.7

Fig.8

Fig.9

Fig.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20110176343 A

- WO 2010057893 A

**Littérature non-brevet citée dans la description**

- A New On Board Fast Battery Charger. *International Conference & Exhibition Autmotive Power Electronics,* Avril 2011

- A New On Board Fast Battery Charger. International Conference & Exhibition Autmotive Power Electronics. Avril 2011